# EUROPEAN PATENT SPECIFICATION

(11) **EP 3 559 891 B1**
(45) Date of publication and mention of the grant of the patent: **17.11.2021**
(21) Application number: 18865362.0
(22) Date of filing: 27.11.2018
(51) Int. Cl.: G06F 21/60, H04L 9/32, G06Q 20/10, G06Q 20/38, H04L 9/14

(54) **EXECUTING MULTI-PARTY TRANSACTIONS USING SMART CONTRACTS**
AUSFÜHRUNG VON TRANSAKTIONEN MIT MEHREREN PARTEIEN UNTER VERWENDUNG INTELLIGENTER VERTRÄGE
EXÉCUTION DE TRANSACTIONS MULTI-PARTIES À L'AIDE DE CONTRATS INTELLIGENTS

(43) Date of publication of application: 30.10.2019
(73) Proprietor: Advanced New Technologies Co., Ltd., George Town, Grand Cayman KY1-9008 (KY)
(72) Inventor: JIN, Ge, Hangzhou, Zhejiang 311121 (CN); SHAO, Kailai, Hangzhou, Zhejiang 311121 (CN); LU, Xuming, Hangzhou, Zhejiang 311121 (CN)
(74) Representative: Fish & Richardson P.C.
(86) International application number: PCT/CN2018/117575
(87) International publication number: WO 2019/072280

(56) References cited:
- CN-A- 108 229 981
- CN-A- 108 242 013
- CN-A- 108 632 045
- CN-A- 108 632 045
- US-A1- 2018 096 121

## Description

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular use case (e.g., crypto-currencies). Example types of blockchain networks can include public blockchain networks, private blockchain networks, and consortium blockchain networks. A public blockchain network is open for all entities to use the DLS, and participate in the consensus process. A private blockchain network is provided for a particular entity, which centrally controls read and write permissions. A consortium blockchain network is provided for a select group of entities, which control the consensus process, and includes an access control layer.

Smart contracts can be created between entities, and executed within a blockchain network. In some examples, a smart contract can define a transaction between the entities within the blockchain network. For example, entities in a blockchain network can call a smart contract to initiate a multi-party transaction. In some instances, each participating entity has to separately confirm the transaction before the smart contract can start executing. For example, single signatures of each participating entity.
US 2019/0347653 A1 describes a blockchain data processing method, apparatus, device, and system. A request for transitioning a state of a contract stored at a blockchain system is received at a plurality of blockchain nodes of the blockchain system. The request includes signature data of at least one state participant of the contract. The contract is associated with a pre-determined number of participants. The signature data is verified at a blockchain node. The verification is based on at least one public key corresponding to the at least one state participant. A determination is made whether the signature data of the at least one state participant is verified. In response to determining that the signature data of the at least one state participant is verified, a new contract state defined in the request is confirmed. The pre-determined number of participants is re-determined in the contract.

### SUMMARY

Implementations of the present patent include computer-implemented methods for verifying multi-party smart contract execution in a blockchain network. More particularly, implementations of the present patent are directed to improving efficiency and data security in smart contract execution.

The present invention is defined by the claims.

The details of one or more implementations of the present specification are set forth in the accompanying drawings and the description below. Other features and advantages of the present specification will be apparent from the description and drawings, and from the claims.

### DESCRIPTION OF DRAWINGS

FIG. 1 depicts an example environment that can be used to execute implementations of the present specification.
FIG. 2 depicts an example conceptual architecture in accordance with implementations of the present specification.
FIG. 3 depicts an example signal diagram for executing a multi-party transaction in accordance with implementations of the present specification.
FIG. 4 depicts an example process that can be executed in accordance with implementations of the present specification.

Like reference symbols in the various drawings indicate like elements.

### DETAILED DESCRIPTION

Implementations of the present specification include computer-implemented methods for verifying multi-party smart contract execution in a blockchain network. More particularly, implementations of the present specification are directed to maintaining a transaction confirmation status of a multi-party transaction using a smart contract, and executing the transaction after confirmation of all parties has been received. In some implementations, actions include receiving first transaction information from a first node, wherein the first node is a computer node in the blockchain network, and wherein the first transaction information includes a transaction payload, a first public key, and a signed transaction payload for a transaction, verifying the signed transaction payload using the first public key, in response to the verifying the signed transaction payload, constructing an unconfirmed transaction data package, and setting a confirmation status of the unconfirmed transaction data package, receiving second transaction information from a second node, wherein the second node is a computer node in the blockchain network, and wherein the second transaction information includes a hash of the transaction payload, a second public key, and a signed hash of the transaction payload for the transaction, verifying the second transaction information using the second public key, updating the confirmation status of the unconfirmed transaction data package, and executing the transaction payload in response to the confirmation status indicating that all parties to the transaction have confirmed the transaction.

To provide further context for implementations of the present specification, and as introduced above, distributed ledger systems (DLSs), which can also be referred to as consensus networks (e.g., made up of peer-to-peer nodes), and blockchain networks, enable participating entities to securely, and immutably conduct transactions, and store data. Although the term blockchain is generally associated with the Bitcoin crypto-currency network, blockchain is used herein to generally refer to a DLS without reference to any particular use case. As introduced above, a blockchain network can be provided as a public blockchain network, a private blockchain network, or a consortium blockchain network. Implementations of the present specification are described in further detail herein with reference to a public blockchain network, which is public among the participating entities. It is contemplated, however, that implementations of the present specification can be realized in any appropriate type of blockchain network.

To provide further context for implementations of the present specification, in blockchain networks, applications can be developed, tested, and deployed for execution within the blockchain network. An example application can include, without limitation, a smart contract. A smart contract can be described as digital representations of real-world, legal contracts having contractual terms affecting various parties. A smart contract is implemented, stored, updated (as needed), and executed within, in the example context, a consortium blockchain network. Contract parties associated with the smart contract (e.g., buyers and sellers) are represented as nodes in the consortium blockchain network.

In some examples, a smart contract can store data, which can be used to record information, facts, associations, balances and any other information needed to implement logic for contract execution. Smart contracts can be described as a computer-executable program consisting of functions, where an instance of the smart contract can be created, and functions invoked for execution of the logic therein.

In technical terms, smart contracts can be implemented based on objects and object-oriented classes. For example, terms and components of the smart contract can be represented as objects that are handled by applications implementing the smart contracts. A smart contract (or an object in the smart contract) can call another smart contract (or an object in the same smart contract) just like other object-oriented objects. Calls that are made by an object can be, for example, a call to create, update, delete, propagate, or communicate with objects of another class. Calls between objects can be implemented as functions, methods, application programming interfaces (APIs), or other calling mechanisms. For example, a first object can call a function to create a second object.

Implementations of the present specification are described in further detail herein in view of the above context. More particularly, and as introduced above, implementations of the present specification are directed to maintaining a transaction confirmation status of a multi-party transaction using a smart contract, and executing the transaction after confirmation of all parties has been received.

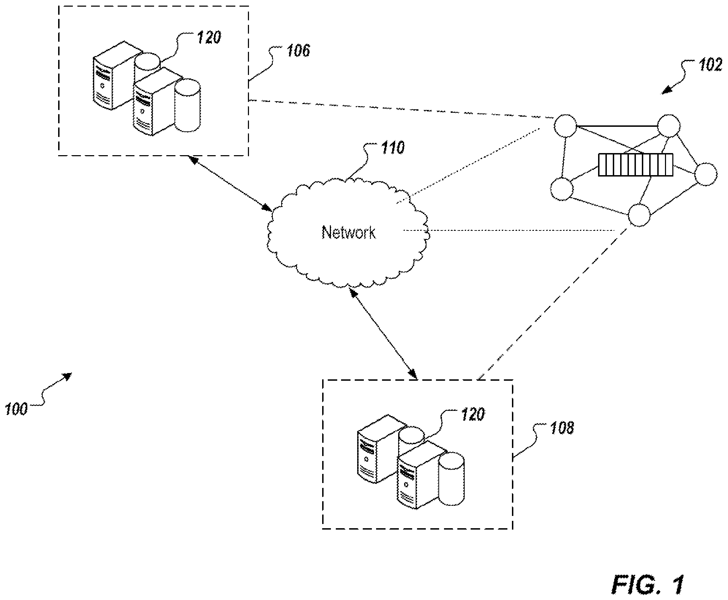

FIG. 1 depicts an example environment 100 that can be used to execute implementations of the present specification. In some examples, the example environment 100 enables entities to participate in a blockchain network 102. The blockchain network 102 can be a public blockchain network, a private blockchain network, or a consortium blockchain network. The example environment 100 includes computing devices 106, 108, and a network 110. In some examples, the network 110 includes a local area network (LAN), wide area network (WAN), the Internet, or a combination thereof, and connects websites, user devices (e.g., computing devices), and back-end systems. In some examples, the network 110 can be accessed over a wired and/or a wireless communications link.

In the depicted example, the computing systems 106, 108 can each include any appropriate computing system that enables participation as a node in the blockchain network 102. Example computing devices include, without limitation, a server, a desktop computer, a laptop computer, a tablet computing device, and a smartphone. In some examples, the computing systems 106, 108 each hosts one or more computer-implemented services for interacting with the blockchain network 102. For example, the computing system 106 can host computer-implemented services of a first entity (e.g., user A), such as transaction management system that the first entity uses to manage its transactions with one or more other entities (e.g., other users). The computing system 108 can host computer-implemented services of a second entity (e.g., user B), such as transaction management system that the second entity uses to manage its transactions with one or more other entities (e.g., other users). In the example of FIG. 1, the blockchain network 102 is represented as a peer-to-peer network of nodes, and the computing systems 106, 108 provide nodes of the first entity, and second entity respectively, which participate in the blockchain network 102.

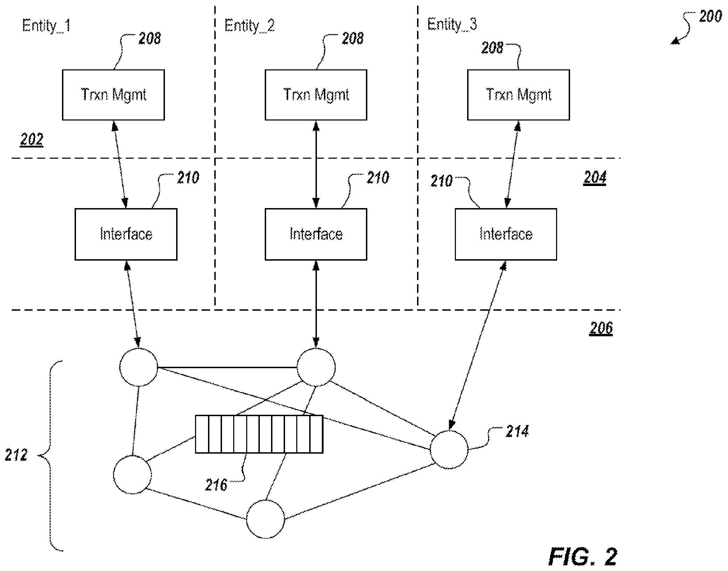

FIG. 2 depicts an example conceptual architecture 200 in accordance with implementations of the present specification. The example conceptual architecture 200 includes an entity layer 202, a hosted services layer 204, and a blockchain network layer 206. In the depicted example, the entity layer 202 includes three entities, Entity_1 (E1), Entity_2 (E2), and Entity_3 (E3), each entity having a respective transaction management system 208.

In the depicted example, the hosted services layer 204 includes interfaces 210 for each transaction management system 210. In some examples, a respective transaction management system 208 communicates with a respective interface 210 over a network (e.g., the network 110 of FIG. 1) using a protocol (e.g., hypertext transfer protocol secure (HTTPS)). In some examples, each interface 210 provides a communication connection between a respective transaction management system 208, and the blockchain network layer 206. More particularly, the interface 210 communicates with a blockchain network 212 of the blockchain network layer 206. In some examples, communication between an interface 210, and the blockchain network layer 206 is conducted using remote procedure calls (RPCs). In some examples, the interfaces 210 "host" blockchain network nodes for the respective transaction management systems 208. For example, the interfaces 210 provide the application programming interface (API) for access to blockchain network 212.

As described herein, the blockchain network 212 is provided as a peer-to-peer network including a plurality of nodes 214 that immutably record information in a blockchain 216. Although a single blockchain 216 is schematically depicted, multiple copies of the blockchain 216 are provided, and are maintained across the blockchain network 212. For example, each node 214 stores a copy of the blockchain. In some implementations, the blockchain 216 stores information associated with transactions that are performed between two or more entities participating in the blockchain network.

As described in further detail herein, implementations of the present specification are directed to execution of multi-party transactions within blockchain networks. In accordance with implementations of the present specification, a smart contract executes in the blockchain network, and verifies signatures of users (parties) participating in a transaction. In some implementations, the smart contract includes an unconfirmed data structure, in which a transaction status is maintained. Upon confirmation of all parties to the transaction, the transaction is executed.

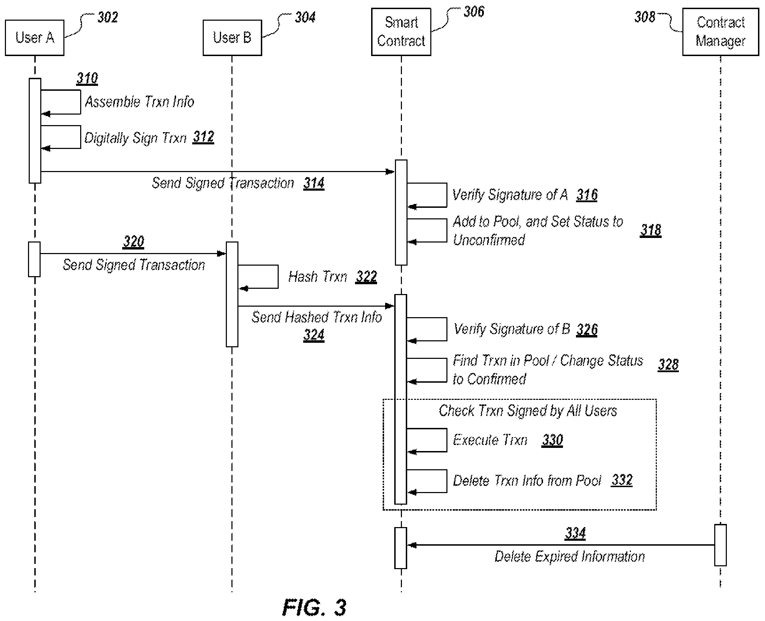

FIG. 3 depicts an example signal diagram 300 for executing a multi-party transaction in accordance with implementations of the present specification. The example signal diagram 300 of FIG. 3 includes a user A 302 (e.g., a node in a blockchain network), a user B 304 (e.g., a node in the blockchain network), a smart contract 306 executing within the blockchain network, and a contract manager 308.

The user A 302 initiates a transaction in the blockchain network by constructing a transaction payload (310). A transaction payload is a data package that provides the details of the intended transaction. For example, the user A 302 can include in the payload the address of all the participating entities (e.g., the user A 302 and the user B 304) within the blockchain network, an asset, and/or value that is the subject of the transaction, and the like.

The user A 302 digitally signs the transaction payload (312). In some implementations, the user A 302 uses asymmetric cryptography technology to sign the transaction payload. For example, the user A 302 can have a key pair associated therewith, the key pair including a public key (e.g., pubkey_A that can be known to anyone participating in the blockchain network), and a private key (e.g., privkey_A that is only known to the user A). The user A302 signs the transaction payload with the private key to provide a hash value (e.g., represented as sig_A(payload)). The following example transaction information package can be provided: [payload, pubkey_A, sig_A (payload)].

In accordance with implementations of the present specification, the user A 302 submits (314) the transaction information package, which includes the transaction payload, the digitally signed transaction payload, and the public key to the smart contract 306. The digital signature of the user A 302 is verified using the public key (316). In some examples, the smart contract 306 verifies that the transaction is valid (e.g., the transaction was sent from the user A 302), the smart contract 306 begins to execute the transaction payload (314). In some examples, the blockchain network verifies the digital signature of the user A 302 using the public key.

If the transaction is a multi-party transaction, that is, a transaction involving at least two participating entities, the smart contract 306 constructs an unconfirmed transaction data package using the transaction payload, stored the unconfirmed transaction data package in an unconfirmed transaction pool, and sets a confirmation (318). An example confirmation status of the unconfirmed transaction data package can include [A: confirmed, B: unconfirmed].

In the invention, the unconfirmed transaction pool is a data store (e.g., an associative array, a table) that includes key-value pairs maintained by the smart contract 306. The key in the unconfirmed transaction pool is a hash value of a transaction payload, and the value in the unconfirmed transaction pool is the corresponding unconfirmed transaction data package. For example, when the user A 302 submits the transaction payload to the smart contract 306, the corresponding entry in the unconfirmed transaction pool can be represented as: (hash(payload), [payload, node_A_address, node_B_address, node_A_confirmation_status, node_B_confirmation_status]).

In addition to submitting the signed transaction payload to the smart contract 306, the user A 302 also submits (320) the signed transaction payload to other participating entities (e.g., the user B 304). The user B 304 uses the public key of the user A 302 to verify the signed payload, hashes the payload, and signs the hashed payload with the private key of the user B 304 (322). The user B 304 submits the hashed payload, the signed hashed payload, and its public key to the smart contract 306.

The smart contract 306 verifies (326) the digital signature of the user B 304 using the public key of the user B 304. The smart contract 306 uses the hashed payload as a key to locate the corresponding unconfirmed transaction data package within the unconfirmed transaction pool (328). The hash function used by the user B 304 is the same hash function used by the smart contract 306 when constructing the unconfirmed transaction data package. The smart contract 306 updates the unconfirmed transaction data package by changing the confirmation status of the user B 302 to confirmed (328) (e.g., [A: confirmed, B: confirmed]).

In an alternative implementation, which is not according to the invention and is present for illustration purposes only, the unconfirmed transaction data package can be located by assigning each transaction payload a universally unique identifier (UUID). Instead of signing the hashed payload, the user B 304 signs the entire payload similar to that performed by the user A 302. The smart contract 306 uses the UUID to locate the unconfirmed transaction pending confirmation of the user B 304.

After all parties (e.g., the user A 302 and the user B 304) have confirmed the transaction, the smart contract 306 executes the transaction (330). If the transaction involves more than two entities, each of the entities other than the initiating entity has to separately hash and sign the transaction payload. In some examples, execution of the transaction includes submitting the transaction to the blockchain network for consensus processing, and packaging of the transaction within a block that is added to the blockchain.

After the transaction concludes (e.g., consensus processing is successful, and the transaction is added to the blockchain), the smart contract 306 removes the transaction from the unconfirmed transaction pool (332).

In the invention, the contract manager 308 periodically checks the unconfirmed transaction pool for an expiration condition. In the invention, an unconfirmed transaction data package only stays in the unconfirmed transaction pool for a predetermined period of time. If the predetermined period of time expires all parties do not confirm the transaction within the predetermined period of time, the unconfirmed transaction is deleted (334). Imposing this time limit ensures that unwanted transactions submitted by malicious entities do not occupy resources of the blockchain network.

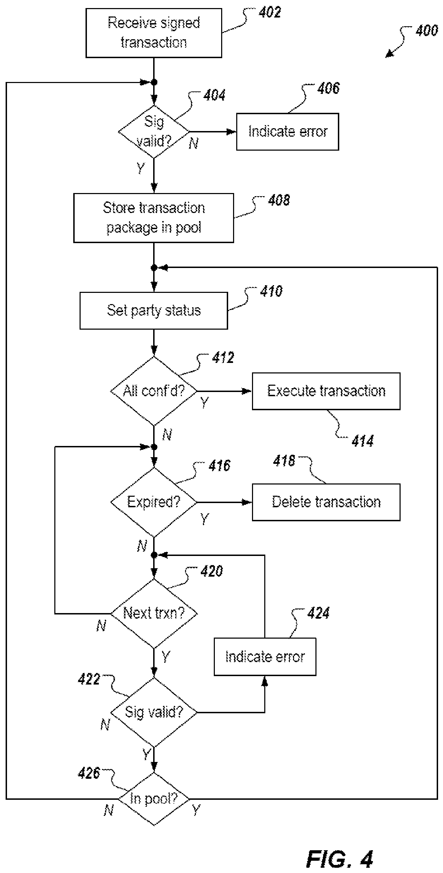

FIG. 4 depicts an example process 400 that can be executed in accordance with implementations of the present specification. In some examples, the example process 400 is provided using one or more computer-executable programs executed by one or more computing devices. For example, at least a portion of the example process 400 can be executed by a smart contract executing within a blockchain network (e.g., the smart contract 306 of FIG. 3 executing within the blockchain network 212 of FIG. 2).

A signed transaction is received (402). For example, the smart contract 306 receives a transaction from the user A 302 (e.g., the user A 302 sends a signed transaction package to the smart contract 306). It is determined whether a signature of the signed transaction is valid (404). For example, the smart contract 306 uses the public key of the user A 302 to determine whether the signature of the transaction is valid. If the signature is not valid, an error is indicated, and the example process 400 ends.

If the signature is valid, an unconfirmed transaction package is provided and is stored in an unconfirmed transaction pool (408). For example, and as described herein, the smart contract 306 provides a key for the transaction based on a hash), and stores the transaction in the unconfirmed transaction pool with the key. A party status is set (410). For example, the smart contract 306 sets a party status of the transaction to [A: confirmed, B: unconfirmed].

It is determined whether all parties to the transaction have confirmed the transaction (412). If all parties have confirmed the transaction, the transaction is executed. For example, the smart contract 306 submits the transaction to the blockchain network for consensus processing. In some examples, the transaction is deleted from the unconfirmed transaction pool.

It is determined whether the transaction has expired (416). For example, the smart contract 306 receives a periodic signal from the contract manager 308, which triggers the smart contract 306 to determine whether the transaction has expired (e.g., has been unconfirmed for greater than or equal to a predetermined period of time). If the transaction has expired, the transaction is deleted from the unconfirmed transaction pool (418). If the transaction has not expired, it is determined whether another transaction has been received (420). If another transaction has not been received, the example process 400 loops back to check expiration.

If another transaction has been received, it is determined whether a signature of the transaction is valid (422). For example, the smart contract 306 receives a transaction from the user B 304 (e.g., the user B 304 sends a signed transaction package to the smart contract 306). If the signature is not valid, an error is indicated 424, and the example process 400 loops back. If the signature is valid, it is determined whether the transaction corresponds to a transaction stored in the unconfirmed transaction pool (426). For example, the smart contract 306 uses a value of the received transaction (e.g., hash, UUID) to search for a corresponding key in the unconfirmed transaction pool. If the transaction is not in the unconfirmed transaction pool, the transaction can be considered a new transaction, and the example process 400 loops back to add the transaction to the unconfirmed transaction pool. If the transaction is in the unconfirmed transaction pool, the example process 400 loops back to update the status of the parties (410) (e.g., the smart contract 306 sets a party status of the transaction to [A: confirmed, B: confirmed]), and determine whether all parties have confirmed that transaction (412), as described herein.

The features described may be implemented in digital electronic circuitry, or in computer hardware, firmware, software, or in combinations of them. The apparatus may be implemented in a computer program product tangibly embodied in an information carrier (e.g., in a machine-readable storage device) for execution by a programmable processor; and method steps may be performed by a programmable processor executing a program of instructions to perform functions of the described implementations by operating on input data and generating output. The described features may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language, including compiled or interpreted languages, and it may be deployed in any form, including as a stand-alone program or as a module, component, subroutine, or another unit suitable for use in a computing environment.

Suitable processors for the execution of a program of instructions include, by way of example, both general and special purpose microprocessors, and the sole processor or one of the multiple processors of any kind of computer. Generally, a processor will receive instructions and data from a read-only memory or a random access memory or both. Elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by ways of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, application-specific integrated circuits (ASICs).

To provide for interaction with a user, the features may be implemented on a computer having a display device such as a cathode ray tube (CRT) or liquid crystal display (LCD) monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system may be connected by any form or medium of digital data communication such as a communication network. Examples of communication networks include, e.g., a local area network (LAN), a wide area network (WAN), and the computers and networks forming the Internet.

The computer system may include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

## Claims

1. A computer-implemented method for maintaining a transaction confirmation status of a multi-party transaction using a smart contract and executing the multi-party transaction in a blockchain network (102), the method comprising:
receiving (402), by a smart contract (306) executing within the blockchain network, first transaction information for the multi-party transaction from a first node, wherein the first node is a first computer node (106) in the blockchain network that initiates the multi-party transaction, and wherein the first transaction information comprises i) a transaction payload, ii) a first public key, and iii) a first signed transaction payload comprising the transaction payload signed with a first private key corresponding to the first public key;
verifying (404), by the smart contract, the first signed transaction payload using the first public key;
in response to the verifying the first signed transaction payload, i) constructing (408), by the smart contract, an unconfirmed transaction data package using the transaction payload and a hash function, ii) storing (408), by the smart contract, the unconfirmed transaction data package in an unconfirmed transaction pool, the unconfirmed transaction pool comprising key-value pairs maintained by the smart contract, wherein keys in the key-value pairs comprise hash values of transaction payloads and values in the key-value pairs comprise corresponding unconfirmed transaction data packages, and iii) setting (408), by the smart contract, a confirmation status of the unconfirmed transaction data package;
receiving, by the smart contract, verified second transaction information for the multi-party transaction from a second node, wherein the second node is a second computer node (108) in the blockchain network that receives the first signed transaction payload from the first node and generates the second transaction information in response to verifying the first signed transaction payload, the second transaction information comprising i) a hash of the transaction payload, wherein the hash of the transaction payload is generated using the hash function, ii) a second public key, and iii) a signed hash of the transaction payload comprising the hash of the transaction payload signed with a second private key corresponding to the second public key;
verifying, by the smart contract, the second transaction information using the second public key, comprising verifying the signed hash of the transaction payload using the second public key;
searching, by the smart contract, the unconfirmed transaction pool for the corresponding unconfirmed transaction data package using the hash of the transaction payload as a key;
in response to locating the corresponding unconfirmed transaction data package, updating, by the smart contract, the confirmation status of the unconfirmed transaction data package;
executing, by the smart contract, the transaction payload in response to the confirmation status indicating that all parties to the multi-party transaction have confirmed the transaction; and
periodically checking, by a contract manager (308), the unconfirmed transaction pool and deleting (334) unconfirmed transactions that are not confirmed within a predetermined period.

2. The method of claim 1, wherein the unconfirmed data package comprises addresses of all nodes required for execution of the multi-party transaction.

3. The method of claim 1, further comprising removing, by the smart contract and after the multi-party transaction concludes, the multi-party transaction from the unconfirmed transaction pool.

4. The method of claim 1, wherein the transaction payload comprises a universally unique identifier in the blockchain network.

5. The method of claim 1, further comprising recording execution of the transaction payload in a blockchain maintained by the blockchain network.

6. The method of claim 1, wherein the first public key and the second public key are stored in a block of a blockchain maintained by the blockchain network.

7. The method of claim 1, wherein the transaction payload comprises an exchange of at least one asset between the first node and the second node.

8. The method of claim 1, further comprising initiating, by the first node, the multi-party transaction in the blockchain network, the initiating comprising:
constructing the transaction payload;
signing the transaction payload using the first private key to generate the first signed transaction payload;
submitting the i) transaction payload, ii) the first public key, and iii) the first signed transaction payload to the smart contract; and
submitting the i) transaction payload, ii) the first public key, and iii) the first signed transaction payload to other entities participating in the multi-party transaction.

9. The method of claim 8, further comprising, for each other entity participating in the multi-party transaction:
receiving, by a node corresponding to the other entity and from the first node, the first signed transaction payload;
verifying, by the node corresponding to the other entity, the first signed transaction payload;
generating, by the node corresponding to the other entity, the second transaction information; and
submitting, by the node corresponding to the other entity, the second transaction information to the smart contract.

10. The method of claim 9, further comprising, for each other entity participating in the multi-party transaction:
receiving, by the smart contract, respective transaction information for the multi-party transaction from the node corresponding to the other entity, the respective transaction information comprising i) a hash of the transaction payload, ii) a respective public key, and iii) a signed hash of the respective transaction payload comprising the hash of the respective transaction payload signed with a respective private key corresponding to the respective public key;
verifying, by the smart contract, the respective transaction information using the respective public key, comprising verifying the signed hash of the respective transaction payload using the respective public key.

11. The method of claim 1, further comprising, in response to unsuccessfully locating the corresponding unconfirmed transaction data package in the unconfirmed transaction pool, adding a new transaction to the unconfirmed transaction pool based on the second transaction information.

12. One or more computer-readable storage media encoded with instructions that, when executed by one or more computers, cause the one or more computers to perform the method of any of claims 1-11.

13. A system, comprising:
one or more computers; and
one or more computer-readable memories coupled to the one or more computers and configured with instructions executable by the one or more computers to perform the method of any of claims 1-11.

## Patentansprüche

1. Computerimplementiertes Verfahren zum Aufrechterhalten eines Transaktionsbestätigungsstatus einer Mehrparteientransaktion unter Verwendung eines "Smart Contracts" und Ausführen der Mehrparteientransaktion in einem Blockchain-Netzwerk (102), wobei das Verfahren umfasst:
Empfangen (402), durch einen "Smart Contract" (306), der innerhalb des Blockchain-Netzwerks ausgeführt wird, von ersten Transaktionsinformationen für die Mehrparteientransaktion von einem ersten Knoten, wobei der erste Knoten ein erster Computerknoten (106) in dem Blockchain-Netzwerk ist, der die Mehrparteientransaktion initiiert, und wobei die ersten Transaktionsinformationen i) eine Transaktionsnutzlast, ii) einen ersten öffentlichen Schlüssel und iii) eine erste signierte Transaktionsnutzlast umfassen, die die Transaktionsnutzlast umfasst, die mit einem ersten privaten Schlüssel signiert ist, der dem ersten öffentlichen Schlüssel entspricht;
Verifizieren (404) der ersten signierten Transaktionsnutzdaten durch den "Smart Contract" unter Verwendung des ersten öffentlichen Schlüssels;
als Reaktion auf das Verifizieren der ersten signierten Transaktionsnutzlast, i) Erstellen (408) eines unbestätigten Transaktionsdatenpakets durch den "Smart Contract" unter Verwendung der Transaktionsnutzlast und einer Hash-Funktion, ii) Speichern (408) des unbestätigten Transaktionsdatenpakets durch den "Smart Contract" in einem Pool unbestätigter Transaktionen, wobei der Pool unbestätigter Transaktionen Schlüssel-Wert-Paare umfasst, die von dem "Smart Contract" verwaltet werden, wobei Schlüssel in den Schlüssel-Wert-Paaren Hash-Werte von Transaktionsnutzlasten umfassen und Werte in den Schlüssel-Wert-Paaren entsprechende unbestätigte Transaktionsdatenpakete umfassen, und iii) Einstellen (408), durch den "Smart Contract", eines Bestätigungsstatus des unbestätigten Transaktionsdatenpakets;
Empfangen, durch den "Smart Contract", verifizierter zweiter Transaktionsinformationen für die Mehrparteientransaktion von einem zweiten Knoten, wobei der zweite Knoten ein zweiter Computerknoten (108) in dem Blockchain-Netzwerk ist, der die erste signierte Transaktionsnutzlast von dem ersten Knoten empfängt und die zweiten Transaktionsinformationen als Reaktion auf das Verifizieren der ersten signierten Transaktionsnutzlast erzeugt, wobei die zweiten Transaktionsinformationen umfassen: i) einen Hash der Transaktionsnutzlast, wobei der Hash der Transaktionsnutzlast unter Verwendung der Hash-Funktion erzeugt wird, ii) einen zweiten öffentlichen Schlüssel, und iii) einen signierten Hash der Transaktionsnutzlast, umfassend den Hash der Transaktionsnutzlast, der mit einem zweiten privaten Schlüssel signiert ist, der dem zweiten öffentlichen Schlüssel entspricht;
Verifizieren der zweiten Transaktionsinformationen durch den "Smart Contract" unter Verwendung des zweiten öffentlichen Schlüssels, umfassend das Verifizieren des signierten Hashs der Transaktionsnutzlast unter Verwendung des zweiten öffentlichen Schlüssels;
Durchsuchen des Pools unbestätigter Transaktionen durch den "Smart Contract" nach dem entsprechenden unbestätigten Transaktionsdatenpaket unter Verwendung des Hashwerts der Transaktionsnutzlast als Schlüssel;
als Reaktion auf das Auffinden des entsprechenden unbestätigten Transaktionsdatenpakets, Aktualisieren des Bestätigungsstatus des unbestätigten Transaktionsdatenpakets durch den "Smart Contract";
Ausführen der Transaktionsnutzlast durch den "Smart Contract" als Reaktion auf den Bestätigungsstatus, der angibt, dass alle Parteien der Mehrparteientransaktion die Transaktion bestätigt haben; und
periodisches Überprüfen des Pools unbestätigter Transaktionen durch einen Transaktionsverwalter (308) und Löschen (334) unbestätigter Transaktionen, die nicht innerhalb eines vorbestimmten Zeitraums bestätigt werden.

2. Verfahren nach Anspruch 1, wobei das unbestätigte Datenpaket Adressen aller für das Ausführen der Mehrparteientransaktion erforderlichen Knoten umfasst.

3. Verfahren nach Anspruch 1, ferner umfassend das Entfernen der Mehrparteientransaktion durch den "Smart Contract" und nach Abschluss der Mehrparteientransaktion aus dem Pool unbestätigter Transaktionen.

4. Verfahren nach Anspruch 1, wobei die Transaktionsnutzlast einen universell eindeutigen Identifikator im Blockchain-Netzwerk umfasst.

5. Verfahren nach Anspruch 1, ferner umfassend das Aufzeichnen des Ausführens der Transaktionsnutzlast in einer Blockchain, die vom Blockchain-Netzwerk verwaltet wird.

6. Verfahren nach Anspruch 1, wobei der erste öffentliche Schlüssel und der zweite öffentliche Schlüssel in einem Block einer Blockchain gespeichert sind, die von dem Blockchain-Netzwerk aufrechterhalten wird.

7. Verfahren nach Anspruch 1, wobei die Transaktionsnutzlast einen Austausch von mindestens einem Vermögenswert zwischen dem ersten Knoten und dem zweiten Knoten umfasst.

8. Verfahren nach Anspruch 1, ferner umfassend das Initiieren der Mehrparteientransaktion in dem Blockchain-Netzwerk durch den ersten Knoten, wobei das Initiieren umfasst:
Erstellen der Transaktionsnutzlast;
Signieren der Transaktionsnutzlast unter Verwendung des ersten privaten Schlüssels, um die erste signierte Transaktionsnutzlast zu erzeugen;
Übermitteln der i) Transaktionsnutzlast, ii) des ersten öffentlichen Schlüssels und iii) der ersten signierten Transaktionsnutzlast an den "Smart Contract"; und
Übermitteln der i) Transaktionsnutzlast, ii) des ersten öffentlichen Schlüssels und iii) der ersten signierten Transaktionsnutzlast an andere Einheiten, die an der Mehrparteientransaktion teilnehmen.

9. Verfahren nach Anspruch 8, ferner umfassend für jede andere Einheit, die an der Mehrparteientransaktion teilnimmt:
Empfangen der ersten signierten Transaktionsnutzlast durch einen der anderen Einheit entsprechenden Knoten und von dem ersten Knoten;
Verifizieren der ersten signierten Transaktionsnutzlast durch den der anderen Einheit entsprechenden Knoten;
Erzeugen der zweiten Transaktionsinformationen durch den der anderen Einheit entsprechenden Knoten; und
Übermitteln der zweiten Transaktionsinformationen an den "Smart Contract" durch den der anderen Einheit entsprechenden Knoten.

10. Verfahren nach Anspruch 9, ferner umfassend für jede andere Einheit, die an der Mehrparteientransaktion teilnimmt:
Empfangen, durch den "Smart Contract", jeweiliger Transaktionsinformationen für die Mehrparteientransaktion von dem der anderen Einheit entsprechenden Knoten, wobei die jeweiligen Transaktionsinformationen i) einen Hash der Transaktionsnutzlast, ii) einen jeweiligen öffentlichen Schlüssel und iii) einen signierten Hash der jeweiligen Transaktionsnutzlast umfassen, umfassend den Hash der jeweiligen Transaktionsnutzlast, signiert mit einem jeweiligen dem jeweiligen öffentlichen Schlüssel entsprechenden privaten Schlüssel;
Verifizieren der jeweiligen Transaktionsinformationen durch den "Smart Contract" unter Verwendung des jeweiligen öffentlichen Schlüssels, umfassend das Verifizieren des signierten Hashs der jeweiligen Transaktionsnutzlast unter Verwendung des jeweiligen öffentlichen Schlüssels.

11. Verfahren nach Anspruch 1, ferner umfassend als Reaktion auf das erfolglose Auffinden des entsprechenden unbestätigten Transaktionsdatenpakets in dem Pool unbestätigter Transaktionen das Hinzufügen einer neuen Transaktion zu dem Pool unbestätigter Transaktionen basierend auf den zweiten Transaktionsinformationen.

12. Computerlesbares Speichermedium oder computerlesbare Speichermedien, die mit Anweisungen codiert sind, die, wenn sie von einem oder mehreren Computern ausgeführt werden, den einen oder die mehreren Computer veranlassen, das Verfahren nach einem der Ansprüche 1-11 durchzuführen.

13. System, umfassend:
einen oder mehrere Computer; und
einen oder mehrere computerlesbare Speicher, die mit dem einen oder den mehreren Computern gekoppelt und dazu ausgelegt sind, mit Anweisungen, die von dem einen oder den mehreren Computern ausgeführt werden können, das Verfahren nach einem der Ansprüche 1-11 durchzuführen.

## Revendications

1. Procédé mis en œuvre par ordinateur pour maintenir un état de confirmation de transaction d'une transaction multipartite utilisant un contrat intelligent et exécutant la transaction multipartite dans un réseau de chaîne de blocs (102), le procédé comprenant les étapes suivantes :
recevoir (402), par un contrat intelligent (306) s'exécutant dans le réseau de chaîne de blocs, des premières informations de transaction pour la transaction multipartite en provenance d'un premier nœud, où le premier nœud est un premier nœud informatique (106) dans le réseau de chaîne de blocs qui initie la transaction multipartite, et où les premières informations de transaction comprennent i) une charge utile de transaction, ii) une première clé publique, et iii) une première charge utile de transaction signée comprenant la charge utile de transaction signée avec une première clé privée correspondant à la première clé publique ;
vérifier (404), par le contrat intelligent, la première charge utile de transaction signée en utilisant la première clé publique ;
en réponse à la vérification de la première charge utile de transaction signée, i) construire (408), par le contrat intelligent, un paquet de données de transaction non confirmée en utilisant la charge utile de transaction et une fonction de hachage, ii) stocker (408), par le contrat intelligent, le paquet de données de transaction non confirmée dans un ensemble de transactions non confirmées, l'ensemble de transactions non confirmées comprenant des paires clé-valeur maintenues par le contrat intelligent, où les clés dans les paires clé-valeur comprennent des valeurs de hachage de charges utiles de transaction et les valeurs dans les paires clé-valeur comprennent des paquets de données de transactions non confirmées correspondants, et iii) définir (408), par le contrat intelligent, un état de confirmation du paquet de données de transaction non confirmée ;
recevoir, par le contrat intelligent, des secondes informations de transaction vérifiée pour la transaction multipartite à partir d'un second nœud, où le second nœud est un second nœud informatique (108) dans le réseau de chaîne de blocs qui reçoit les premières données utiles de transaction signées à partir du premier nœud et génère les secondes informations de transaction en réponse à la vérification des premières données utiles de transaction signées, les secondes informations de transaction comprenant i) un hachage de la charge utile de transaction, où le hachage de la charge utile de transaction est généré en utilisant la fonction de hachage, ii) une seconde clé publique, et iii) un hachage signé de la charge utile de transaction comprenant le hachage de la charge utile de transaction signée avec une seconde clé privée correspondant à la seconde clé publique ;
vérifier, par le contrat intelligent, les secondes informations de transaction en utilisant la seconde clé publique, ce qui comprend la vérification du hachage signé des données utiles de transaction en utilisant la seconde clé publique ;
rechercher, par le contrat intelligent, l'ensemble de transactions non confirmées pour le paquet de données de transaction non confirmée correspondant en utilisant le hachage de la charge utile de transaction comme clé ;
en réponse à la localisation du paquet de données de transaction non confirmée correspondant, mettre à jour, par le contrat intelligent, l'état de confirmation du paquet de données de transaction non confirmée ;
exécuter, par le contrat intelligent, les données utiles de transaction en réponse à l'état de confirmation indiquant que toutes les parties de la transaction multipartite ont confirmé la transaction ; et
vérifier périodiquement, par un gestionnaire de contrat (308), l'ensemble de transactions non confirmées, et
supprimer (334) les transactions non confirmées qui ne sont pas confirmées dans une période prédéterminée.

2. Procédé selon la revendication 1, dans lequel le paquet de données non confirmées comprend les adresses de tous les nœuds nécessaires à l'exécution de la transaction multipartite.

3. Procédé selon la revendication 1, comprenant en outre de supprimer, par le contrat intelligent et après la conclusion de la transaction multipartite, la transaction multipartite de l'ensemble de transactions non confirmées.

4. Procédé selon la revendication 1, dans lequel la charge utile de la transaction comprend un identifiant universellement unique dans le réseau de chaîne de blocs.

5. Procédé selon la revendication 1, comprenant en outre d'enregistrer l'exécution de la charge utile de transaction dans une chaîne de blocs maintenue par le réseau de chaîne de blocs.

6. Procédé selon la revendication 1, dans lequel la première clé publique et la seconde clé publique sont stockées dans un bloc d'une chaîne de blocs maintenue par le réseau de chaîne de blocs.

7. Procédé selon la revendication 1, dans lequel la charge utile de transaction comprend un échange d'au moins un actif entre le premier nœud et le second nœud.

8. Procédé selon la revendication 1, comprenant en outre d'initier, par le premier nœud, la transaction multipartite dans le réseau de chaîne de blocs, l'initiation comprenant les étapes suivantes :
construire les données utiles de transaction ;
signer les données utiles de transaction en utilisant la première clé privée pour générer les premières données utiles de transaction signées ;
soumettre i) les données utiles de transaction, ii) la première clé publique, et iii) les premières données utiles de transaction signées au contrat intelligent ; et
soumettre i) les données utiles de transaction, ii) la première clé publique, et iii) les premières données utiles de transaction signées à d'autres entités participant à la transaction multipartite.

9. Procédé selon la revendication 8, comprenant en outre, pour chaque autre entité participant à la transaction multipartite les étapes suivantes :
recevoir, par un nœud correspondant à l'autre entité et à partir du premier nœud, la première charge utile de transaction signée ;
vérifier, par le nœud correspondant à l'autre entité, la première charge utile de transaction signée ;
générer, par le nœud correspondant à l'autre entité, les secondes informations de transaction ; et
soumettre, par le nœud correspondant à l'autre entité, les secondes informations de transaction au contrat intelligent.

10. Procédé selon la revendication 9, comprenant en outre, pour chaque autre entité participant à la transaction multipartite, les étapes suivantes :
recevoir, par le contrat intelligent, des informations de la transaction respective pour la transaction multipartite en provenance du nœud correspondant à l'autre entité, les informations de la transaction respective comprenant i) un hachage des données utiles de transaction, ii) une clé publique respective, et iii) un hachage signé des données utiles de la transaction respective comprenant le hachage des données utiles de la transaction respective signées avec une clé privée respective correspondant à la clé publique respective ;
vérifier, par le contrat intelligent, les informations de la transaction respective en utilisant la clé publique respective, ce qui comprend de vérifier le hachage signé de la charge utile de la transaction respective en utilisant la clé publique respective.

11. Procédé selon la revendication 1, comprenant en outre, en réponse à la localisation infructueuse du paquet de données de transaction non confirmée correspondant dans l'ensemble de transactions non confirmées, d'ajouter une nouvelle transaction à l'ensemble de transactions non confirmées sur la base des secondes informations de transaction.

12. Un ou plusieurs supports de stockage lisibles par ordinateur codés avec des instructions qui, lorsqu'elles sont exécutées par un ou plusieurs ordinateurs, amènent les un ou plusieurs ordinateurs à exécuter le procédé de l'une quelconque des revendications 1 à 11.

13. Système, comprenant :
un ou plusieurs ordinateurs ; et
une ou plusieurs mémoires lisibles par ordinateur couplées aux un ou plusieurs ordinateurs et configurées avec des instructions exécutables par les un ou plusieurs ordinateurs pour exécuter le procédé de l'une quelconque des revendications 1 à 11.
